# EUROPEAN PATENT APPLICATION

(11) **EP 4 708 510 A1**
(43) Date of publication of application: **11.03.2026**
(21) Application number: 24892467.2
(22) Date of filing: 27.11.2024
(51) Int. Cl.: H01M 50/244, H01M 50/204, H01M 50/256

(54) **ENERGY STORAGE CABINET**

(30) Priority: 08.07.2024 CN 202421595580 U
(71) Applicant: Contemporary Amperex Technology Co., Limited, Jiaocheng District Ningde Fujian 352100 (CN); Contemporary Amperex Future Energy Technology (Shenzhen) Limited, Shenzhen, Guangdong 518100 (CN)
(72) Inventor: XU, Jinmei, Ningde, Fujian 352100 (CN); ZHENG, Zhimin, Ningde, Fujian 352100 (CN); CHENG, Yong, Ningde, Fujian 352100 (CN)
(74) Representative: Gong, Jinping
(86) International application number: PCT/CN2024/134942
(87) International publication number: WO 2026/011653

(57) **Abstract**

The present disclosure discloses an energy storage cabinet, including: a cabinet body and a base for supporting the cabinet body; the cabinet body is provided with an accommodating space, and a battery is accommodated in the accommodating space; the base includes two first beams which are opposite in a first direction, and two second beams which are opposite in a second direction; each first beam includes a first supporting portion, a middle connecting portion and a second supporting portion which are sequentially connected in the second direction; one second beam is connected between the two first supporting portions which are opposite in the first direction; the other second beam is connected between the two second supporting portions which are opposite in the first direction; fork through holes are respectively formed in each first supporting portion and each second supporting portion; the fork through holes respectively formed in the first supporting portions define a first fork channel; the fork through holes respectively formed in the second supporting portions define a second fork channel; and the first fork channel and the second fork channel extend in the same direction.

## Description

### CROSS-REFERENCE TO RELATED APPLICATIONS

The present disclosure is based on the Chinese Patent Application No. 202421595580.9, entitled "ENERGY STORAGE CABINET" and filed on July 8, 2024, and claims the priority to the China patent application, which is incorporated here by reference in its entirety.

### TECHNICAL FIELD

The present disclosure relates to the technical field of energy storage, and particularly relates to an energy storage cabinet.

### BACKGROUND

An energy storage cabinet is an integrated device that integrates the functions of energy storage and power supply for a load, and it is efficient, flexible and reliable, and is widely used in the industrial, commercial and residential fields. For example, the energy storage cabinet can store electric energy when the load of a power grid is low, and release the electric energy during a peak load of the power grid, thus reducing the burden on the power grid, realizing peak load shaving of the power grid, and improving the power utilization rate. Therefore, it is hoped that the energy storage cabinet can be flexibly applied to more application scenarios. The energy storage cabinet is required to be light in weight and convenient to carry.

### SUMMARY OF THE INVENTION

In order to solve the above technical problems, the present disclosure provides an energy storage cabinet which is lightweight and convenient to carry.

The present disclosure is realized through the following technical solutions.

In a first aspect, the present disclosure provides an energy storage cabinet, including: a cabinet body and a base for supporting the cabinet body; the cabinet body is provided with an accommodating space, and a battery is accommodated in the accommodating space; the base includes two first beams which are opposite in a first direction, and two second beams which are opposite in a second direction, and the first direction is vertical to the second direction; each first beam includes a first supporting portion, a middle connecting portion and a second supporting portion which are sequentially connected in the second direction; one second beam is connected between the two first supporting portions which are opposite in the first direction; the other second beam is connected between the two second supporting portions which are opposite in the first direction; fork through holes are respectively formed in each first supporting portion and each second supporting portion; the fork through holes respectively formed in the first supporting portions define a first fork channel; the fork through holes respectively formed in the second supporting portions define a second fork channel; and the first fork channel and the second fork channel extend in the same direction.

The two first beams and the two second beams are connected to form the base which is of a framework structure, facilitating light weighting of the energy storage cabinet; and the first supporting portions and the second supporting portions are main parts for bearing the cabinet body, and the fork through holes for allowing forks to insert are respectively formed in the first supporting portions and the second supporting portions, so the carrying stability and reliability are further improved while convenience of carrying is ensured.

In some embodiments, the width of the first supporting portions and the width of the second supporting portions in the first direction are larger than the width of the middle connecting portions in the first direction.

The width of the first supporting portions and the width of the second supporting portions are larger than the width of the middle connecting portions, so the strength of the first supporting portions and the strength of the second supporting portions can be enhanced, and then the supporting reliability and the carrying stability are improved; and moreover, by properly reducing the width of the middle connecting portions, the weight of the middle connecting portions can be reduced, and therefore light weighting of the base and even the whole energy storage cabinet can realized.

In some embodiments, the length of the first supporting portions and the length of the second supporting portions in the second direction are larger than the width of the second beams in the second direction.

The length of the first supporting portions and the length of the second supporting portions are larger, thus the strength of the first supporting portions and the strength of the second supporting portions can be enhanced, and then the supporting reliability is improved; and by properly reducing the width of the second beams, the weight of the second beams can be reduced without affecting the supporting effect, and therefore lightweighting of the base and even the whole energy storage cabinet can realized.

In some embodiments, in the opening length direction of the fork through holes, the opening length of the fork through holes accounts for 50% or more of the length of the first supporting portions, and the opening length direction is vertical to the extending direction of the first fork channel or the second fork channel; and/or, in the opening length direction of the fork through holes, the opening length of the fork through holes accounts for 50% or more of the size of the second supporting portions.

The proportion of the opening length of the fork through holes to the length of the supporting portions is within a proper range, and the supporting strength and the lightweighting can be ensured at the same time. The fork through holes are large to adapt to forks of various specifications, and even if the weight of the energy storage cabinet is large, it can also be stably carried through a forklift and the like.

In some embodiments, in the first direction, the width of the first supporting portions is the same as the width of the second supporting portions, and the width of the middle connecting portions accounts for 50% or more and does not exceed 100% of the width of the first supporting portions or the second supporting portions.

The ratio of the width of the middle connecting portions to the width of the first supporting portions or the second supporting portions is within a proper range, thus both the supporting strength of the base and the lightweighting requirement can be met.

In some embodiments, in a third direction, each first supporting portion and each second supporting portion have the same thickness, and the thickness of the corresponding middle connecting portion is smaller than the thickness of the first supporting portion or the second supporting portion.

The thickness of the first supporting portions and the thickness of the second supporting portions are larger, so the strength of the first supporting portions and the strength of the second supporting portions can be enhanced, and then the supporting strength is improved; and by properly reducing the thickness of the middle connecting portions, the weight of the middle connecting portions can be reduced, and therefore, the lightweighting requirement of the base and even the whole energy storage cabinet can be met.

In some embodiments, a cross section of each second beam and a cross section of each middle connecting portion are a rectangle with an opening on one side; in the first direction, two middle connecting portions are arranged in a manner that the openings in the cross sections are opposite to each other; and in the second direction, two second beams are arranged in a manner that the openings in the cross sections are opposite to each other.

The cross section of each second beam and the cross section of each middle connecting portion are a rectangle with an opening on one side, thus each second beam and each middle connecting portion are of a hollow structure, and then the weight of the base can be reduced, facilitating the lightweighting of the energy storage cabinet; the opening of each second beam is opposite, the opening of each middle connecting portion is opposite, and thus the opening of the middle connecting portion and the opening of the second beam face an inner side of the base; and an outer side surface of each middle connecting portion and an outer side surface of each first beam are closed surfaces that can prevent liquid, dust and other sundries from entering the base, and therefore the service life of the base is prolonged, and the reliability of the base is improved.

In some embodiments, the energy storage cabinet further includes: a first guard member which seals the openings at two ends of the first fork channel and is detachably mounted on each first supporting portion; and a second guard member which seals the openings at two ends of the second fork channel and is detachably mounted on each second supporting portion.

The first guard member and the second guard member correspondingly seal the openings in the two ends of the first fork channel and the second fork channel correspondingly, thus a risk that liquid, dust and other sundries enter the first fork channel and the second fork channel can be reduced, and the service life of the base can be prolonged.

In some embodiments, the first guard member includes a metal sheet, and a plastic sheet; and/or, the second guard member includes a metal sheet and a plastic sheet.

The first guard member and the second guard member are the metal sheets and the plastic sheets, thus the weight can be reduced while sundries are prevented from entering the fork through holes, and the lightweighting requirement of the base and even the whole energy storage cabinet can be met.

The embodiments of the present disclosure include at least the following beneficial effects: the carrying efficiency of the energy storage cabinet can be improved, and the requirement for lightweighting can be met through the embodiments of the present disclosure.

### DESCRIPTION OF DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present disclosure. Moreover, in all of the drawings, the same components are indicated by the same reference numerals. In the accompanying drawings:
FIG. 1 is a structural schematic diagram of an energy storage cabinet provided by some embodiments of the present disclosure;
FIG. 2 is a three-dimensional schematic diagram of a base provided by some embodiments of the present disclosure;
FIG. 3 is a top view of a base provided by some embodiments of the present disclosure;
FIG. 4 is a main view of a base provided by some embodiments of the present disclosure;
FIG. 5 is a side view of a base provided by some embodiments of the present disclosure; and
FIG. 6 is a partial cross-sectional view of a base provided by some embodiments of the present disclosure.

### Description of reference numerals:

100-energy storage cabinet; 10-cabinet body; 20-base; 21-fork through hole; 23-second beam; 24-first beam; 251-first protective member; 252-second protective member; 30-battery; 23a-opening of second beam; 211-first fork channel; 212-second fork channel; 241-first supporting portion; 242-middle connecting portion; 242a-opening of middle connecting portion; and 243-second supporting portion.

### DETAILED DESCRIPTION

Examples of the technical solutions of the present disclosure will be described in detail below in conjunction with the drawings. The following embodiments are only used to illustrate the technical solutions of the present disclosure more clearly, and are therefore used only as examples, and should not be used to limit the protection scope of the present disclosure.

Unless otherwise defined, all technical and scientific terms used herein have the same meaning as commonly understood by those skilled in the art belonging to the technical field of the present disclosure; the terms used herein are intended only for the purpose of describing specific embodiments and are not intended to limit the present disclosure; the terms " including" and "having" and any variations thereof in the specification of the present disclosure and in the description of drawings above are intended to cover non-exclusive inclusion.

In the description of the embodiments of the present disclosure, the technical terms "first", "second", "third", and the like are used only to distinguish between different objects, and are not to be understood as indicating or implying a relative importance or implicitly specifying the number, particular order, or primary and secondary relation of the technical features indicated. In the description of the embodiments of the present disclosure, "a plurality of" means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is only an association relationship for describing associated objects, indicating that three relationships may exist. For example, A and/or B may indicate three situations: A exists alone, both A and B exist, and B exists alone. In addition, the character "/" herein generally indicates an "or" relationship between the associated objects.

In the description of the embodiments of the present disclosure, the technical terms "length", "width", "thickness", "upper", "lower", "front", "rear", "left", "right", "vertical", "horizontal", "top", "bottom", "inner", "outer", "circumferential", and the like indicate orientations or positional relationships based on the orientations or positional relationships shown in the drawings, and are intended only to facilitate and simplify the description of the embodiments of the present disclosure, and are not intended to indicate or imply that a device or element referred to must have a particular orientation, be constructed, operated and used in a particular orientation, and therefore should not be construed as limiting the embodiments of the present disclosure.

In the description of the embodiments of the present disclosure, unless otherwise expressly specified and defined, the technical terms "mounted", "linked", "connected", "fixed", and the like are to be understood broadly, and may, for example, be fixedly connected or detachably connected, or integrated; and may also be mechanically connected or electrically connected; and may be directly linked or indirectly linked through an intermediate medium, and may be internal communication or interaction between two elements. For those of ordinary skill in the art, the specific meanings of the above terms in the embodiments of the present disclosure can be understood according to specific situations.

In the description of the embodiments of the present disclosure, unless otherwise expressly specified or qualified, the technical term "contact" shall be understood broadly, may refer to a direct contact, or a contact through an intermediate media layer, or a contact that is between two parts in contact and is substantially free of interacting force, or a contact that is between two parts in contact and has an interacting force.

In the embodiments of the present disclosure, a battery may be a secondary battery, and the secondary battery refers to a battery that can activate an active material in a charging manner after being discharged so as to continue the use.

The battery may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead storage battery and the like, which is not limited in the embodiments of the preset disclosure.

The battery generally includes one or more battery cells, and each battery cell generally includes an electrode assembly. The electrode assembly includes a positive electrode, a negative electrode and a spacer. During charging and discharging of the battery cell, active ions (such as lithium ions) are intercalated and deintercalated back and forth between the positive electrode and the negative electrode. The spacer is arranged between the positive electrode and the negative electrode, may play a role in preventing the positive electrode and the negative electrode from being short-circuited, and may enable active ions to pass through.

In some embodiments, the positive electrode may be a positive electrode plate, and the positive electrode plate may comprise a positive electrode current collector and a positive electrode active material arranged on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, the positive electrode current collector may be a metal foil or composite current collector. For example, as the metal foil, aluminum or stainless steel subjected to silver surface treatment, stainless steel, copper, aluminum, nickel, titanium and the like may be adopted. The composite current collector may include a high molecular material base layer and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of a group consisting of following materials: lithium-containing phosphate, lithium transition metal oxide and modified compounds thereof. However, there is no limitation on the materials in the present disclosure, and other traditional materials that can be used as the positive electrode active materials of the battery can also be used. Only one of the positive electrode active materials may be used independently, or two or more positive electrode active materials are be used in combination. The example of the lithium-containing phosphate may include but is not limited to at least one of a group consisting of lithium iron phosphate (such as LiFePO₄ (LFP for short)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

In some embodiments, the positive electrode may adopt metal foam. The foam metal may be nickel foam, copper foam, aluminum foam, alloy foam and the like. When the metal foam is treated as the positive electrode, the positive electrode active material may be not arranged on a surface of the metal foam, and the positive electrode active material may also be arranged. As an example, a lithium source material, potassium metal or sodium metal may also be filled or/and deposited in the metal foam, and the lithium source material is lithium metal and/or a lithium-rich material.

In some embodiments, the negative electrode may be a negative electrode plate, and the negative electrode plate may include a negative electrode current collector.

As an example, the negative electrode current collector may adopt a metal foil, metal foam or a composite current collector. For example, as the metal foil, aluminum or stainless steel subjected to silver surface treatment, stainless, copper, aluminum, nickel, titanium and the like may be adopted. The composite current collector may include a high molecular material base layer and a metal layer. The foam metal may be nickel foam, copper foam, aluminum foam, alloy foam and the like. The composite current collector may be formed by forming a metal material (such as copper, copper alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene). In some embodiments, the material of the positive electrode current collector may be aluminum, and the material of the negative electrode current collector may be copper.

In some embodiments, the electrode assembly further includes a spacer, and the spacer is arranged between the positive electrode and the negative electrode.

In some embodiments, the spacer is an separator. There is no special limitation on the type of the separator in the present disclosure, and any known porous structural separator with good chemical stability and mechanical stability can be selected.

As an example, the main material of the separator may be selected from a group consisting of at least one of glass fiber, non-woven fabric, polyethylene, polypropylene, polyvinylidene fluoride and ceramic.

In some embodiments, the spacer is a solid electrolyte. The solid electrolyte is arranged between the positive electrode and the negative electrode and plays a role in transmitting ions and isolating the positive electrode and the negative electrode.

In some embodiments, the battery cell further includes an electrolyte, and the electrolyte plays a role in conducting ions between the positive electrode and the negative electrode. There is no special limitation on the type of the electrolyte in the present disclosure, and it can be selected according to requirements. The electrolyte can be liquid, gel or solid.

In some embodiments, the electrode assembly is of a winding structure. The positive electrode plate and the negative electrode plate are wound into a winding structure.

In some embodiments, the electrode assembly is of a laminated plate structure.

As an example, a plurality of positive plates and a plurality of negative plates may be provided, and the plurality of positive plates and the plurality of negative plates are alternately stacked.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided respectively between any adjacent positive electrode plates or negative electrode plates.

As an example, the spacers may be continuously provided between any adjacent positive electrode plates or negative electrode plates in a folding or winding mode.

In some embodiments, the electrode assembly can be cylindrical, flat or multi-prism-shaped.

In some embodiments, the electrode assembly is provided with a tab, and the tab may lead current out of the electrode assembly. The tab includes a positive tab and a negative tab.

In some embodiments, the battery cell may include a shell. The shell is configured to encapsulate components, such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch cell, or a battery cell in another shape. The prismatic battery cell includes a square battery cell, a blade battery cell, and a multi-prism battery. For example, the multi-prism battery may be a hexagonal prism battery, or the like, which is not specifically limited in the present disclosure.

In some embodiments, the shell includes an end cover and a case, the case is provided with an opening, and the end cover closes the opening to form a closed space for accommodating substances such as the electrode assembly and the electrolyte. The case may be provided with one or a plurality of openings. One or a plurality of end covers may also be provided.

In some embodiments, the shell is provided with at least one electrode terminal, and the electrode terminal is electrically connected to a tab. The electrode terminal may be directly connected to the tab, or may also be indirectly connected to the tab through an adapter. The electrode terminal may be arranged on the end cover, or may also be arranged on the case.

In some embodiments, the shell is provided with a pressure relief mechanism. The pressure relief mechanism is used for relieving internal pressure of the battery cell.

In some embodiments, the battery may be a battery module, and the battery module includes one or more battery cells to provide a single physical module with higher voltage and capacity. When there are a plurality of battery cells, the plurality of battery cells are connected in series, in parallel or in series-parallel through a bus component. The plurality of battery cells are arranged and fixed to form a battery module.

In some embodiments, the battery may be a battery pack, the battery pack includes a box body and a battery cell, and the battery cell or the battery module is accommodated in the box body.

The present disclosure will be detailed below.

An energy storage cabinet is an integrated device that integrates the functions of energy storage and electric energy release, and it is efficient, flexible and reliable, and is widely used in the industrial, commercial and residential fields. For example, the energy storage cabinet can store electric energy when the load of a power grid is low, and release the electric energy during a peak load of the power grid, thus reducing the burden on the power grid, realizing peak load shaving of the power grid, and improving the power utilization rate. Therefore, it is hoped that the energy storage cabinet can be flexibly applied to more application scenarios. The energy storage cabinet is required to be light in weight and convenient to carry.

In the related technology, when the energy storage cabinet needs to be carried, it is needed to lift and place the energy storage cabinet on a tray, then the tray and the energy storage cabinet borne on the tray are carried to a destination together through a carrying device (such as a forklift), and then the energy storage cabinet is detached from the tray. Such mode is inconvenient to carry the storage cabinet, low in efficiency, time-consuming and labor-consuming. Especially, when the energy storage cabinet is placed on the tray or detached from the tray, additional carrying device or manpower assistance is needed.

In other related technologies, bases are arranged at the bottom of the energy storage cabinet. However, the inventor of the present disclosure notices that the weights of the bases also become the burden in carrying.

Therefore, the inventor of the present disclosure designs an energy storage cabinet base of a frame structure, and fork through holes are formed in the base, so that the lightweighting of the energy storage cabinet is facilitated, and the energy storage cabinet is convenient to carry.

Based on the above design concept, an embodiment of the present disclosure provides an energy storage cabinet, including: a cabinet body and a base for supporting the cabinet body; the cabinet body is provided with an accommodating space, and a battery is accommodated in the accommodating space; the base includes two first beams which are opposite in a first direction, and two second beams which are opposite in a second direction; each first beam includes a first supporting portion, a middle connecting portion and a second supporting portion which are sequentially connected in the second direction; one second beam is connected between the two first supporting portions which are opposite in the first direction; the other second beam is connected between the two second supporting portions which are opposite in the first direction; fork through holes are respectively formed in each first supporting portion and each second supporting portion; the fork through holes respectively formed in the first supporting portions define a first fork channel; the fork through holes respectively formed in the second supporting portions define a second fork channel; and the first fork channel and the second fork channel extend in the same direction.

The two first beams and two second beams are connected to each other to form a base which is of a frame structure, thus the weight of the base can be reduced, the lightweighting of the energy storage cabinet is facilitated, and the convenience of carry is ensured; in addition, the first supporting portion and the second supporting portion of each first beam are main supporting structures for supporting the cabinet body, the fork through holes are formed in the first supporting portion and the second supporting portion respectively, and the fork through holes limit the fork channels extending in the first direction, so that the carrying stability is improved, the weight of each first beam is further reduced, and then the lightweighting of the energy storage cabinet is improved.

The energy storage cabinet according to the embodiment of the present disclosure can be applied to the fields of new energy power stations, smart power grids, electric vehicle charging piles and the like, and can also be applied to the fields of industry, residential areas, commercial buildings and the like, and the fields of communication base stations, data centers, traffic facilities and the like.

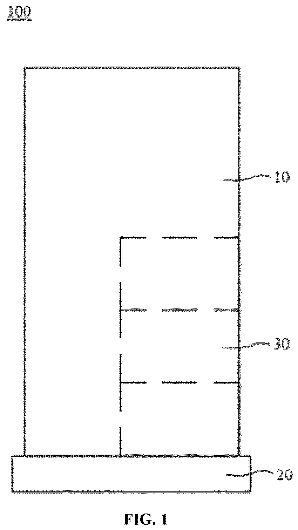

With reference to FIG. 1 to FIG. 6, an energy storage cabinet 100 according to the present disclosure is described in detail below.

The energy storage cabinet 100 according to the embodiment of the present disclosure includes: a cabinet body 10 and a base 20 for supporting the cabinet body 10; the cabinet body 10 is provided with an accommodating space, and a battery 30 is accommodated in the accommodating space; the base 20 includes two first beams 24 which are opposite in a first direction X, and two second beams 23 which are opposite in a second direction Y, and the first direction X is vertical to the second direction Y; each first beam 24 includes a first supporting portion 241, a middle connecting portion 242 and a second supporting portion 243 which are sequentially connected in the second direction Y; one second beam 23 is connected between the two first supporting portions 241 which are opposite in the first direction X; the other second beam 23 is connected between the two second supporting portions 243 which are opposite in the first direction X; fork through holes 21 are respectively formed in each first supporting portion 241 and each second supporting portion 243; the fork through holes 21 respectively formed in the first supporting portions 241 define a first fork channel 211; the fork through holes 21 respectively formed in the second supporting portions 243 define a second fork channel 212; and the first fork channel 211 and the second fork channel 212 extend in the same direction.

The cabinet body 10 provides the accommodating space for the battery 30 and other components, and plays a role of protecting. In some embodiments, a support used for bearing the battery 30 is arranged in the accommodating space. The battery 30 in the accommodating space may be the battery mentioned above, which will not be listed here. An electric control assembly, a cooling device and the like may be further arranged in the accommodating space.

The energy storage cabinet 100 is usually connected to a power grid to store electric energy from the power grid as chemical energy in the battery. Optionally, the energy storage cabinet 100 may be connected into the power grid through an inverter, or, connected to the power grid by being connected to a transformer.

The cabinet body 10 may be provided with a cabinet door that can be opened and closed. Exemplarily, the cabinet door is connected to the cabinet body 10 in a pivoted mode.

The cabinet body 10 may be provided with a power supply interface of a charging interface; when electricity needs to be stored, it is electrically connected to the power grid end through the charging interface so as to charge the battery 30; and when electricity needs to be supplied, it is electrically connected to a load end through the power supply interface so as to supply power to a load. The power supply interface and the load end may be in a connected state all the time and powered on according to control, and the power supply interface may also be connected to the load end when charging is needed, and is powered on according to control.

The cabinet body 10 may be in various shapes, such as a cuboid shape and a cylinder shape. Exemplarily, the cabinet body 10 may be in a cuboid shape.

The base 20 is used for supporting the cabinet body 10. The base 20 and the cabinet body 10 may be arranged in a split mode, or may be connected to each other. Exemplarily, the bottom of the cabinet body 10 is fixedly connected to the base 20, and therefore a risk that the cabinet body topples over from the base 20 can be reduced.

The base 20 may be in a square frame shape or a circular frame shape or other shapes, and there is no special limitation on the shape as long as the base 20 can stably support the cabinet body 10. Exemplarily, the base 20 may be in a square frame shape. Structural reinforcing members and the like may be additionally arranged in the frame-shaped base 20 according to needs.

The base 20 is provided with the fork through holes 21 for allowing forks of a forklift to penetrate through. The shape of the fork through holes 21 may be matched with the shape of the forks. Exemplarily, the forks may be forks of a carrier or the forklift.

The fork through holes 21 may be formed in a side surface of the base 20 for allowing the forks to be inserted, and the orientation of the side surface is roughly consistent with a direction in which the forks enter the fork through holes 21. In one specific embodiment, a side with a cabinet door of the cabinet body 10 is treated as a front surface of the cabinet body 10, a surface opposite to the front surface is treated as a back surface of the cabinet body, and the two surfaces between the front surface and the back surface are treated as a left side surface and a right side surface respectively; the base 20 includes four side surfaces which are located on the same side as the front surface, the back surface, the left side surface and the right side surface correspondingly; and the forks can be inserted from any one of the four side surfaces.

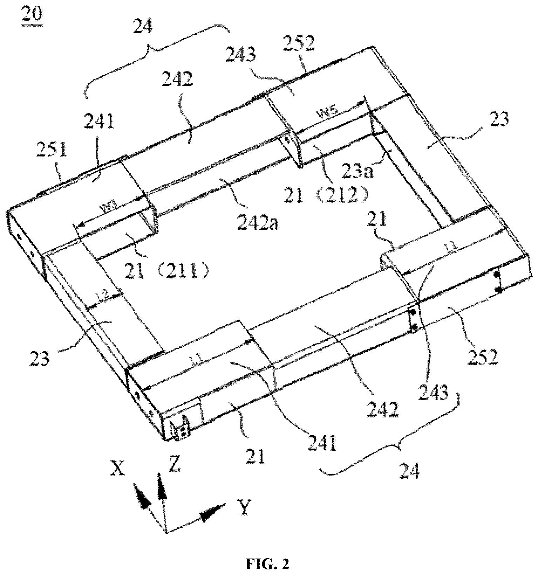

In some embodiments, as shown in FIG. 2 to FIG. 5, the base 20 includes the two first beams 24 which are opposite in the first direction X, and the two second beams 23 which are opposite in the second direction Y, and the first direction X is vertical to the second direction Y; each first beam 24 includes the first supporting portion 241, the middle connecting portion 242 and the second supporting portion 243 which are sequentially connected in the second direction Y; one second beam 23 is connected between the two first supporting portions 241 which are opposite in the first direction X; the other second beam 23 is connected between the two second supporting portions 243 which are opposite in the first direction X; the fork through holes 21 are respectively formed in each first supporting portion 241 and each second supporting portion 243; the fork through holes 21 respectively formed in the first supporting portions 241 define the first fork channel 211; the fork through holes 21 respectively formed in the second supporting portions 243 define the second fork channel 212; and the first fork channel 211 and the second fork channel 212 extend in the same direction.

The base 20 includes the two first beams 24 and the two second beams 23, and the two first beams 24 and the two second beams 23 are connected to form the frame structure which is conducive to weight reduction. Exemplarily, the first supporting portion 241, the intermediate connecting portion 242 and the second supporting portion 243 of each first beam 24 are sequentially connected in the second direction Y. Exemplarily, the connection method includes welding, two ends of one second beam 23 in the first direction X may be welded to the two opposite first supporting portions 241 respectively, and two ends of the other second beam 23 in the first direction X may be welded to the two opposite second supporting portions 243 respectively.

The cabinet body 10 is supported by at least the first supporting portions 241 and the second supporting portions 243. Exemplarily, the bottom of the cabinet body 10 is welded to the first supporting portions 241 and the second supporting portions 243. Definitely, the cabinet body 10 and the base 20 may also be detachably connected to each other.

In some embodiments, as shown in FIG. 2, the first supporting portions 241 are surrounded by a plurality of supporting walls to form a box shape with an opening, specifically, including supporting walls which are opposite to each other in the first direction X, supporting walls which are opposite to each other in the second direction Y, and supporting walls which are opposite to each other in the third direction Z, however, the supporting arms avoid the position of the fork channel. The second supporting portions 243 may be of a structure similar to the first supporting portions 241, which will not be listed here.

Further, second beams 23 are connected between the two first supporting portions 241 which are opposite in the first direction X, one end of each second beam 23 is connected to the supporting wall of one first supporting portion 241, and the other end of the second beam 23 is connected to the supporting wall of the other first supporting portion 241. Exemplarily, the peripheral edges of the second beams 23 are welded to wall surfaces of the supporting walls.

The first supporting portions 241 and the second supporting portions 243 are provided with the fork through holes 21. The fork through holes 21 formed in the first supporting portions 241 define the first fork channel 211, the fork through holes 21 formed in the second supporting portions 243 define the second fork channel 212, the first fork channel 211 and the second fork channel 212 extend in the same direction, or the first fork channel 211 and the second fork channel 212 extend in the second direction Y, or the first fork channel 211 and the second fork channel 212 extend in the first direction X as shown in FIG. 2. In addition, the first fork channel 211 extends from one first supporting portion 241 to penetrate through the other first supporting portion 241; and similarly, the second fork channel 212 extends from one second supporting portion 243 to penetrate through the other second supporting portion 243.

As an example, when the energy storage cabinet 100 is fully charged at the power grid end, the power grid interface will be disconnected, the forks of the forklift are inserted into the first fork channel 211 and the second fork channel 212 to carry the energy storage cabinet 100, so as to directly carry the energy storage cabinet 100 which is fully charged to a target position.

The base 20 which is formed by connecting the two first beams 24 and the two second beams 23 and is of the frame structure, compared with an integrated plate-shaped base in the related technology, is light in weight, and therefore the lightweighting of the energy storage cabinet is achieved, and the convenience of carrying is ensured; because the first supporting portions 241 and the second supporting portions 243 are main components for bearing the cabinet body 10, the first supporting portions 241 and the second supporting portions 243 are respectively provided with the fork through holes allowing the forks to insert, and the fork through holes define the fork channel extending in the first direction, the supporting reliability and the carrying stability can be improved.

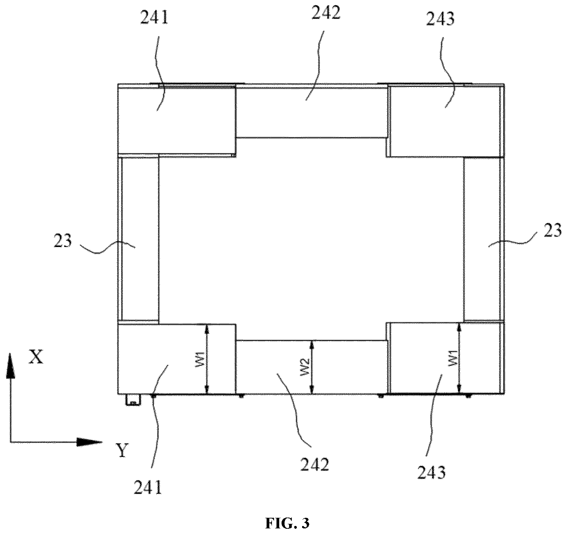

In some embodiments, as shown in FIG. 3, in the first direction X, the width W1 of the first supporting portions 241 and the width W1 of the second supporting portions 243 are both larger than the width W2 of the middle connecting portions 242.

Because the first supporting portions 241 and the second supporting portions 243 are the main components for bearing the cabinet body 10, and are also the main stress components for bearing the base 20 when the forklift carries the energy storage cabinet 100, the width W1 of the first supporting portions 241 and the width W1 of the second supporting portions 243 are both larger than the width W2 of the middle connecting portions 242, the strength of the first supporting portions 241 and the second supporting portions 243 can be enhanced, and the reliability of supporting the cabinet body and bearing the base 20 with the forks; and by properly reducing the width W2 of the middle connecting portions 242, the weight of the middle connecting portions 242 can be reduced without affecting the supporting effect, and therefore the lightweighting of the base 20 and even the whole energy storage cabinet 100 can be realized.

In some embodiments, in the first direction X, the width W1 of the first supporting portions 241 is the same as the width W1 of the second supporting portions 243, and the width W2 of the middle connecting portions 242 accounts for 50% or more and does not exceed 100% of the width W1 of the first supporting portions 241 or the second supporting portions 243.

Exemplarily, W2/W1 may be 50%, 60%, 70%, 75%, 80%, 90%, and 100%. W2/W1 is not limited to the proportions above, and may also be other proportions within the range of 50% to 100%.

The proportion of the width of the middle connecting portions 242 to the width of the first supporting portions 241 or the second supporting portions 243 is within the proper range, so that the supporting strength of the base 20 can be guaranteed, and the lightweighting requirement can be met.

In some embodiments, with reference to FIG. 2, the length L1 of the first supporting portions 241 and the second supporting portions 243 in the second direction Y is larger than the beam width L2 of the second beam 23 in the second direction Y.

The length L1 of the first supporting portions 241 and the second supporting portions 243 is larger, so the strength of the first supporting portions 241 and the second supporting portions 243 can be enhanced, and then the reliability of supporting the cabinet body and bearing the base 20 with the forks is improved; and by properly reducing the beam width L2 of the second beam 23, the weight of the second beam can be reduced, and therefore the lightweighting of the base 20 and even the whole energy storage cabinet 100 is realized. The fork through holes are large to adapt to forks of various specifications, and even if the weight of the energy storage cabinet is large, it can also be stably carried through a forklift and the like.

In some embodiments, with reference to FIG. 2, in the opening length direction (such as the second direction Y) of the fork through holes 21, the opening length W3 of the fork through holes 21 formed in the first supporting portions 241 accounts for 50% or more of the length L1 of the first supporting portions 241, and the opening length direction is vertical to the extending direction of the first fork channel 211 or the second fork channel 212; and/or, in the opening length direction (such as the second direction Y) of the fork through holes 21, the opening length W5 of the fork through hole 21 formed in the second supporting portions 243 accounts for 50% or more of the length L1 of the second supporting portions 243.

Exemplarily, W3/L1 or W5/L1 may be 50%, 60%, 70%, 75%, 80%, 90%, 95%, but smaller than 100%, because the first supporting portions 241 are connected to the second beams 23 beside the fork through holes 21, the fork channel needs to avoid the second beams 23.

The length L1 of the first supporting portions 241 and the length L1 of the second supporting portions 243 may be the same or different.

The proportion of the opening length of the fork through holes 21 to the length of the supporting portions is within a proper range, so the supporting strength and the lightweighting can be both ensured.

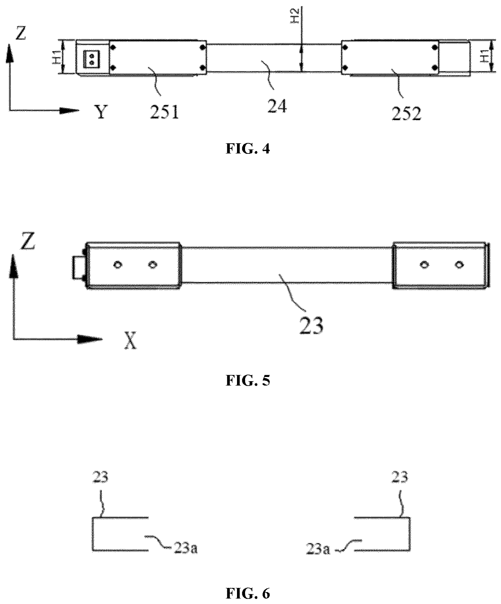

In some embodiments, with reference to FIG. 4, in the third direction Z, each first supporting portion 241 and each second supporting portion 243 have the same thickness H1, and the thickness H2 of the middle connecting portions 242 is smaller than the thickness H2 of the first supporting portions 241 or the second supporting portions 243.

The thickness H1 of the first supporting portions 241 and the thickness H1 of the second supporting portion 243 are larger, thus the strength of the first supporting portions 241 and the strength of the second supporting portions 243 can be enhanced, and then the reliability of supporting the cabinet body and bearing the base 20 with the forks is improved; and by properly reducing the thickness H2 of the non-bearing middle connecting portions 242, the weight of the middle connecting portions 242 can be reduced, and therefore the lightweighting of the base 20 and even the whole energy storage cabinet 100 can be realized.

In some embodiments, as shown FIG. 2 and FIG. 6, the cross section of each second beam 23 and the cross section of each middle connecting portion 242 are a rectangle with an opening on one side; in the first direction X, two middle connecting portions 242 are arranged in a manner that the openings in the cross sections are opposite to each other; and in the second direction Y, two second beams 23 are arranged in a manner that the openings in the cross sections are opposite to each other. FIG. 6 only shows the shape of the cross sections of the second beams 23.

With reference to FIG. 2 and FIG. 6, the cross section of each second beam 23 and the cross section of each middle connecting portion 242 are in the rectangular shape with the openings in one side, so each second beam 23 and each middle connecting portion 242 are of a hollow structure, and then the weight of the base 20 can be reduced, and the lightweighting of the energy storage cabinet 100 can be realized; an opening 23a of each second beam is opposite, and an opening 242a of each middle connecting portion is opposite; the openings 242a of the middle connecting portions and the openings 23a of the second beam face an inner side of the base 20, outer side surfaces of the middle connecting portions 242 and outer side surfaces of first beams 24 are closed faces for preventing liquid, dust and other sundries from entering each second beam 23 and each middle connecting portion 242, and therefore the reliability of the base 20 is improved.

In some embodiments, the energy storage cabinet 100 further includes: a first guard member 251 which seals the openings at two ends of the first fork channel 211 and is detachably mounted on each first supporting portion 241; and a second guard member 252 which seals openings at two ends of the second fork channel 212 and is detachably mounted on each second supporting portion 243.

The second guard members 252 shown in FIG. 2 are taken as an example for description. The second guard members 252 seal the openings that are formed in two ends, in the first direction X, of the second fork channel 212 of the second supporting portions 243. Exemplarily, the second guard members 252 are connected to the second supporting portions 243 through screws. Exemplarily, as shown in FIG. 2, one end of each second guard member 252 is connected to the corresponding second supporting portion 243 through screws, and the other end is connected to the corresponding middle connecting portion 242 through screws. The first guard members 251 may be arranged and connected in the same manner, which will not be listed here. In addition, in FIG. 2, one of the first guard members 251 is dismounted.

When the energy storage cabinet 100 needs to be carried, the first guard members 251 and the second guard members 252 may be dismounted from each first supporting portion 241 and each second supporting portion 243 correspondingly, then the openings in the two ends of the first fork channel 211 and the openings in the two ends of the second fork channel 212 are opened, and therefore the forks can be inserted into the first fork channel 211 and the second fork channel 212 conveniently; and when the energy storage cabinet 100 does not need to be carried, the first guard members 251 and the second guard members 252 may be mounted on each first supporting portion 241 and each second supporting portion 243 correspondingly, and the openings in the two ends of the first fork channel 211 and the openings in the two ends of the second fork channel 212 are sealed to prevent liquid, dust and other sundries from entering the first fork channel 211 and the second fork channel 212.

Therefore, a risk that liquid, dust and other sundries, small animals and the like enter the first fork channel 211 and the second fork channel 212 may be reduced.

For example, the first guard members 251 and the second guard members 252 may be detachably connected through bolt connection, clamping connection, pasting, magnetic attraction and other modes.

In some embodiments, the first guard members 251 include a metal sheet, and a plastic sheet; and/or, the second guard members 252 include a metal sheet, and a plastic sheet. The metal sheet may be an aluminum sheet, an aluminum alloy sheet, a stainless steel sheet and the like. The plastic sheet may be a plastic steel sheet and the like. Exemplarily, the first guard members 251 and the second guard members 252 may be skinned.

The first guard members 251 and the second guard members 252 are metal sheets, and plastic sheets, so that the weight can be reduced while sundries are prevented from entering the forks through holes, and the lightweighting of the base 20 and even the whole energy storage cabinet 100 is realized.

One specific example of the embodiment of the present disclosure is described below.

With reference to FIG. 1 to FIG. 6, the energy storage cabinet 100 according to the embodiment of the present disclosure includes: the cabinet body 10 and the base 20 for supporting the cabinet body 10; the cabinet body 10 includes the accommodating space; and the battery 30 is accommodated in the accommodating space.

The base 20 includes the two first beams 24 which are opposite in the first direction X, and the two second beams 23 which are opposite in the second direction Y, and the first direction X is vertical to the second direction Y; each first beam 24 includes the first supporting portion 241, the middle connecting portion 242 and the second supporting portion 243 which are sequentially connected in the second direction Y; one second beam 23 is connected between the two first supporting portions 241 which are opposite in the first direction X by welding; the other second beam 23 is connected between the two second supporting portions 243 which are opposite in the first direction X by welding; the fork through holes 21 are respectively formed in each first supporting portion 241 and each second supporting portion 243; the fork through holes 21 respectively formed in the first supporting portions 241 define the first fork channel 211; the fork through holes 21 respectively formed in the second supporting portions 243 define the second fork channel 212; and the first fork channel 211 and the second fork channel 212 extend in the first direction X.

In the first direction X, the width W1 of the first supporting portions 241 and the width W1 of the second supporting portions 243 are both larger than the width W2 of the middle connecting portions 242. The length L1 of the first supporting portions 241 and the second supporting portions 243 in the second direction Y is larger than the beam width L2 of the second beam 23 in the second direction Y. In the opening length direction (such as the second direction Y) of the fork through holes 21, the opening length W3 of the fork through holes 21 formed in the first supporting portions 241 accounts for 50% or more of the length L1 of the first supporting portions 241, in which, the opening length direction is vertical to the extending direction of the first fork channel 211 or the second fork channel 212; and/or, in the opening length direction (such as the second direction Y) of the fork through holes 21, the opening length W5 of the fork through hole 21 formed in the second supporting portions 243 accounts for 50% or more of the length L1 of the second supporting portions 243. With reference to FIG. 4, in the third direction Z, each first supporting portion 241 and each second supporting portion 243 have the same thickness H1, and the thickness H2 of the middle connecting portions 242 is smaller than the thickness H2 of the first supporting portions 241 or the second supporting portions 243. The cross section of each second beam 23 and the cross section of each middle connecting portion 242 are a rectangle with an opening on one side; in the first direction X, two middle connecting portions 242 are arranged in a manner that the openings in the cross sections are opposite to each other; and in the second direction Y, two second beams 23 are arranged in a manner that the openings in the cross sections are opposite to each other

The material of the base 20 may metal, alloy and the like, for example, the base may be a steel base, an aluminum alloy base and the like.

The above embodiments are only used for illustrating the technical solutions of the present disclosure, and are not limited to them; although the present disclosure has been described in detail with reference to the foregoing embodiments, those of ordinary skill in the art should understand that it may still modify the technical solutions described in the foregoing embodiments, or replace some or all of the technical features therein; these modifications or substitutions do not make the essence of the corresponding technical solutions out of the scope of the technical solutions of each embodiment of the present disclosure, and they shall be covered within the scope of the present disclosure. In particular, the technical features mentioned in the various embodiments can be combined in any manner as long as there is no structural conflict. The present disclosure is not limited to the specific embodiments disclosed in the text, but includes all technical solutions that fall within the scope of the present disclosure.

## Claims

1. An energy storage cabinet, comprising:
a cabinet body and a base for supporting the cabinet body, wherein the cabinet body comprises an accommodating space, and a battery is accommodated in the accommodating space;
the base comprises two first beams which are opposite in a first direction, and two second beams which are opposite in a second direction, and the first direction is vertical to the second direction;
each first beam comprises a first supporting portion, a middle connecting portion and a second supporting portion which are sequentially connected in the second direction;
one second beam is connected between two first supporting portions which are opposite in the first direction; the other second beam is connected between two second supporting portions which are opposite in the first direction;
fork through holes are respectively formed in each first supporting portion and each second supporting portion; the fork through holes respectively formed in the first supporting portions define a first fork channel; the fork through holes respectively formed in the second supporting portions define a second fork channel; and the first fork channel and the second fork channel extend in the same direction.

2. The energy storage cabinet according to claim 1, wherein
the width of the first supporting portions and the width of the second supporting portions in the first direction are larger than the width of the middle connecting portions in the first direction.

3. The energy storage cabinet according to claim 1 or 2, wherein
the length of the first supporting portions and the length of the second supporting portions in the second direction are larger than the width of the second beams in the second direction.

4. The energy storage cabinet according to claim 3, wherein
in an opening length direction of the fork through holes, the opening length of the fork through holes accounts for 50% or more of the length of the first supporting portions, wherein the opening length direction is vertical to the extending direction of the first fork channel or the second fork channel; and/or,
in the opening length direction of the fork through holes, the opening length of the fork through holes accounts for 50% or more of the size of the second supporting portions.

5. The energy storage cabinet according to claim 3 or 4, wherein
in the first direction, the width of the first supporting portions is the same as the width of the second supporting portions, and the width of the middle connecting portions accounts for 50% or more and does not exceed 100% of the width of the first supporting portions or the second supporting portions.

6. The energy storage cabinet according to any one of claims 3 to 5, wherein
in a third direction, each first supporting portion and each second supporting portion have the same thickness, and
the thickness of the corresponding middle connecting portion is smaller than the thickness of the first supporting portion or the second supporting portion.

7. The energy storage cabinet according to any one of claims 3 to 6, wherein
the cross section of each second beam and the cross section of each middle connecting portion are a rectangle with an opening on one side;
in the first direction, the two middle connecting portions are arranged in a manner that the openings in the cross sections are opposite; and
in the second direction, the two second beams are arranged in a manner that the openings in the cross sections are opposite.

8. The energy storage cabinet according to any one of claims 1 to 7, wherein
the energy storage cabinet further comprises:
a first guard member which seals the openings at two ends of the first fork channel and is detachably mounted on each first supporting portion; and
a second guard member which seals openings at two ends of the second fork channel and is detachably mounted on each second supporting portion.

9. The energy storage cabinet according to claim 8, wherein
the first guard member comprises a metal sheet, and a plastic sheet; and/or,
the second guard member comprises a metal sheet and a plastic sheet.
